# EUROPEAN PATENT SPECIFICATION

(11) **EP 0 370 496 B1**
(45) Date of publication and mention of the grant of the patent: **20.04.1994**
(21) Application number: 89121585.7
(22) Date of filing: 22.11.1989
(51) Int. Cl.: B29C 45/57, B29C 45/73, A61C 13/16

(54) **Device for supplying plastic material for denture base and flask with the same**
Kunststoffzuführvorrichtung für Zahnstützvorrichtung und damit versehener Formkosten
Dispositif d'alimentation de matière plastique pour support dentaire et châssis de moulage le comportant

(30) Priority: 24.11.1988 JP 296798/88
(43) Date of publication of application: 30.05.1990
(73) Proprietor: CHUGOKU SHIKEN KABUSHIKI KAISHA, Hiroshima-shi Hiroshima-ken (JP)
(72) Inventor: Ueno, Masato, Hiroshima-shi Hiroshima-ken (JP)
(74) Representative: Türk, Gille, Hrabal, Leifert

(56) References cited:
- DE-A- 3 322 343
- DE-C- 849 476
- GB-A- 2 174 007
- US-A- 1 875 660
- PLASTICS ENGINEERING, vol. 35, no. 6, June 1979, pages 41-44, Greenwich, GB; W.G. HALSTEAD et al.: "Processing- Vary the volume, control the shrinkage"

## Description

The present invention relates to a device for supplying plastic material for denture base into a flask, comprising the features of the preamble of claim 1.

There is known a device for supplying plastic material for a denture base, e.g. polymethyl methacrylate (PMMA), as disclosed, for example, in JP-U1-145519/1986.

Further, it is known to apply plastic material, e.g. thermoplastic elastomer, on the backside (to be in contact with a mucous membrane) of a denture in order to form a lining, for example, as disclosed in JP-A-342/1987.

By blending powder of PMMA with liquified methyl methacrylate (MMA) monomer, kneading the blend to obtain a plastic (dough) material, compressing the material inbetween a set of plaster models, and heating the material in hot water or vapour of about 100 to 130°C for a period, the MMA material is polymerized and set, and then a denture base is obtained.

During the initial stage of polymerization, the material expands due to boiling of the liquid MMA monomer, heat-expansion of PMMA, and the like. As polimerization and cooling progress, the material shrinks, and heat-deformation results.

The above-mentioned JP-U1-145519/1986 discloses a device having a piston and cylinder for supplying the shortage of PMMA when the material shrinks. However, that device has the drawback that bubbles and cavities tend to be produced in the denture bases, because the PMMA material expands initially and then shrinks.

Further, the above-mentioned JP-A-342/1987 discloses a device for forming a liner made of thermoplastic elastomer and for fixing the liner on the backside of a denture base when PMMA material is polimerized and set under heating at the same time. However, the thermoplastic elastomer also expands under heating, and shrinks when cooled. Thus, bubbles and cavities are generated in the resulting liner also.

Also, a device in accordance with the preamble of claim 1 is known (US-A-1,875,660) which is provided for supplying plastic material into a flask and which comprises a cylinder having an inside end opening into the cavity of the flask, a piston slidably inserted in the cylinder, a spring urging the piston toward the inside of the flask, and a stopper restricting the outside stroke end of the piston.

However, there are no provisions disclosed, how to avoid bubbles and cavities in the denture base if the conditions of expansion and shrinkage are not even but alter.

The object of the invention is to supply plastic material for denture base or the like under pressure into a flask avoiding to produce bubbles and cavities in the denture base or the like.

According to the present invention, there is provided a device for supplying plastic material under pressure into a flask, comprising a cylinder having an inside end opening into the cavity of the flask, a piston slidably inserted in the cylinder, a spring urging the piston toward the inside of the flask, and a stopper restricting the outside stroke end of the piston, which is provided with a means for adjusting the elastic force of the spring. The means for adjusting the elastic force of the spring has a spring receiver for supporting one end of the spring, the other end of which is abutted against the outside of the piston, a screw rod having an inside end connected to the spring receiver and having an outer screw portion, a nut member having an inner screw mating with the outer screw of the screw rod and fixed at the outside end of the cylinder, and a handle for rotating the screw rod.

When the above-mentioned supplying device is used, the means for adjusting the elastic force is adjusted to keep the force in its weakest state. Under that condition, the cavity of the flask is filled with plastic material for forming a denture base under pressure. At the same time, the cylinder is also filled with the same material under pressure. Therefore, the piston is moved outward and is stopped by the stopper.

In the above condition, even if plastic material (PMMA or thermoplastic elastomer for liner) expands under heating, the piston does not move any further since the stopper supports the piston. Therefore, the inner volume of the cavity for forming the denture base is not changed and high pressure is maintained in the cavity while the plastic material (PMMA) is heated to be polymerized or the thermoplastic material is heated to be bonded on the main body of the denture base. Therefore, neither bubbles nor mold cavities are generated in the denture base or the liner.

Further, at the appropriate time after the polymerization of PMMA begins, the adjusting means is operated to strengthen the force of the spring. In that condition, even if the plastic material (PMMA) shrinks due to progress of polymerization or cooling, the correct form is created because the same material is supplied from the cylinder.

When the liner is heated and bonded onto the main body of the denture base, the bonding is strengthened because the inner space where the denture base is formed is kept under high pressure.

Further, while cooling naturally, operating the handle member of the means for adjusting spring force to increase the spring force supplies more material to the liner to compensate even if the denture base shrinks. Therefore, bubbles and molding cavities are eliminated.

The adjusting means is operated after the polymerization begins in the above case. However, in the actual case, the means can be operated after the piston is supported by the stopper since all openings of the space are shut before the polymerization.

Hereinafter, the present invention will be explained in detail with reference to the accompanying drawings, wherein
Fig. 1 is a sectional view (along line I-I in Fig. 2) of a first embodiment of the flask of the present invention,
Fig. 2 is a perspective view of the flask of Fig. 1,
Fig. 3 is a perspective view of the lower half of the flask shown in Fig. 2 in a state before assembling,
Figs. 4 and 5 are plan views of two embodiments of the lower half of the flask of the present invention, respectively,
Fig. 6 is a sectional view of the lower half of a second embodiment of the flask of the present invention,
Fig. 7 is a perspective view of the rubber plug shown in Fig. 6,
Fig. 8 is a sectional view of a second embodiment of the flask of the present invention,
Fig. 9 is a perspective view of the rubber ring shown in Fig. 8,
Fig. 10 is a sectional view of the flask of Fig. 8 at a different stage of forming,
Fig. 11 is a partially cut away perspective view of the lower half of the third embodiment of the flask of the present invention,
Fig. 12 is a perspective view of an embodiment of heat-insulating members to be used with the flask of Fig. 11,
Fig. 13 is a sectional view obtained along line XIII-XIII in Fig. 12,
Figs. 14 and 15 are plan views of embodiments of the lower half of the flask when used,
Fig. 16 is a sectional view obtained along line XVI-XVI Fig. 14, and
Fig. 17 is a sectional view in part showing an embodiment of the filling device used in the present invention.

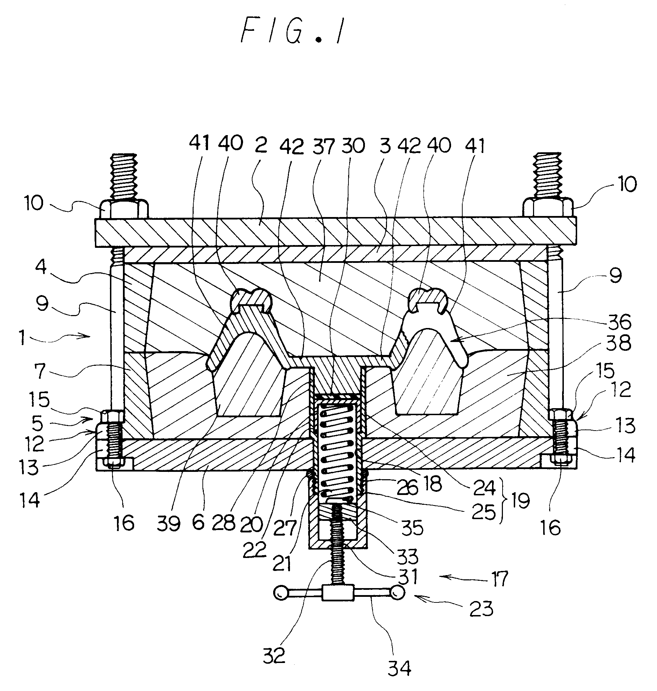

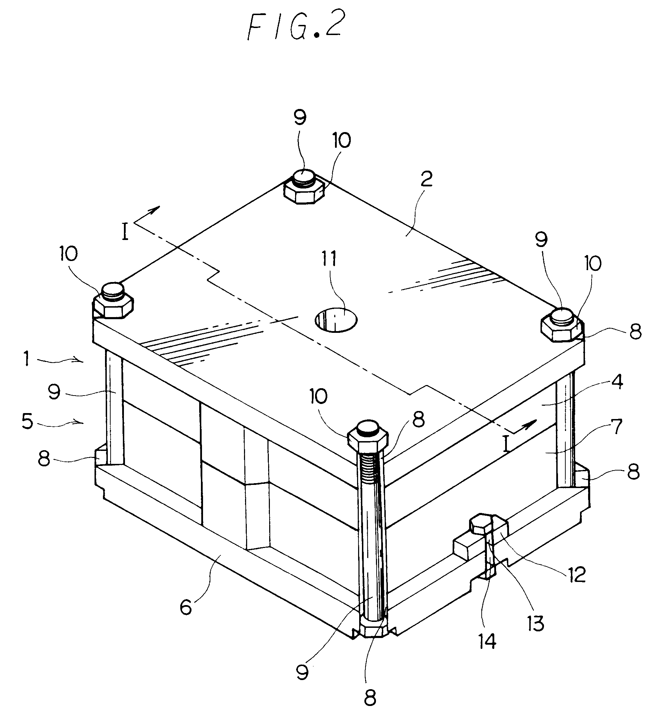

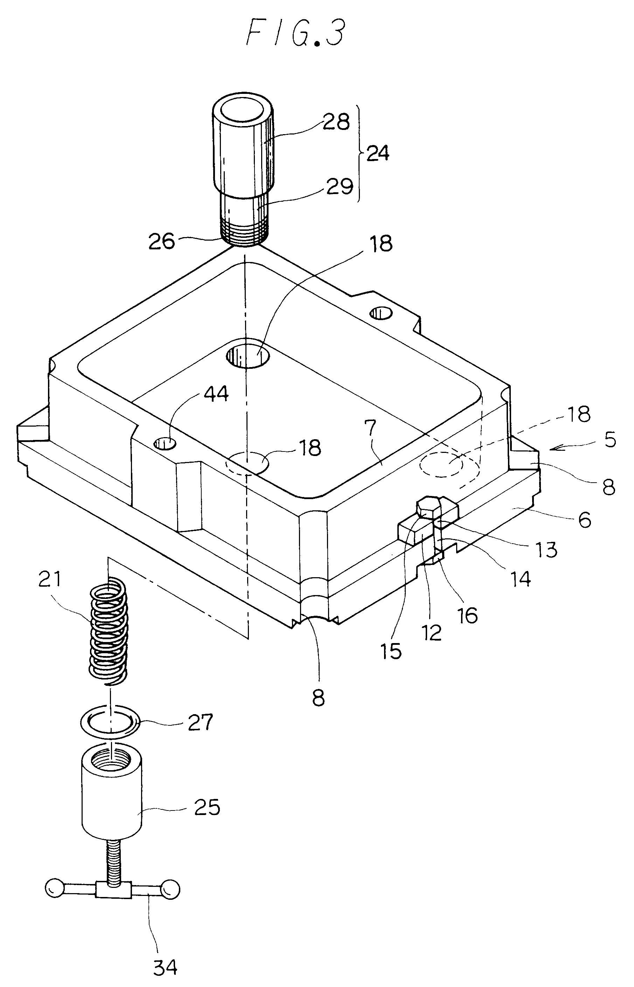

Referring to Figs. 1 to 3, the upper half 1 of a flask comprises an upper lid 2, a middle lid 3 and a frame 4 which are made of metal (for example, brass, alminum, stainless steel) and are formed to a substantially rectangular shape. The size of frame 4 is, for example, about 8 cm in width, about 10 cm in length and about 2.5 cm in height. As shown in the drawings, the inside surface of the frame slants so that the frame 4 can be easily removed from a plaster mold 37.

The lower half 5 of the flask comprises a lower lid 6 and a frame 7 being rectangular in shape. Further, the inside surface of the frame slants so that the free end side is enlarged.

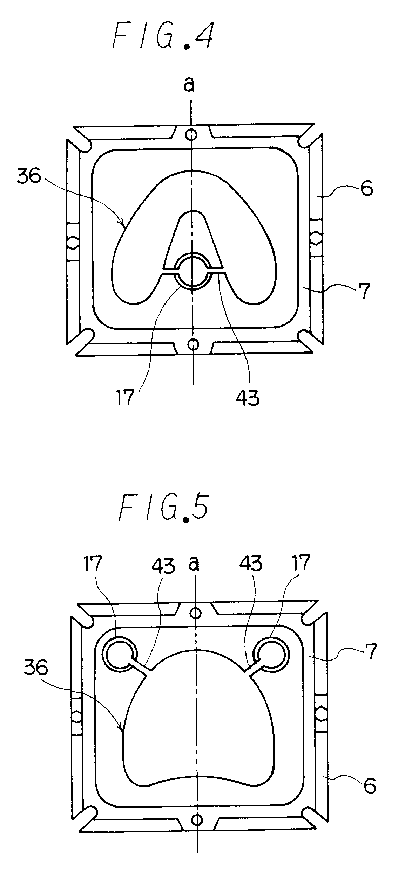

Upper lid 2 and lower lid 6 are slightly larger than frames 4 and 7 and middle lid 2, and they have U-shaped cut portions 8, as shown in Fig. 2.

Bolts 9 are inserted through the cut portions 8, and the bolts 9 and nuts 10 securely hold the upper lid 2 and the lower lid 6 and draw and fasten them together.

A hole 11 (Fig. 2) is formed near the center of the upper lid 2. This hole 11 exists in middle lid 3 as well. Hole 11 is utilized for fixing the plaster 37 and for injecting material for a denture base from the outside of the flask.

Frame 7 is provided with fingers 12 projecting lateraly from lower end of the frame 7. Each finger 12 has a U-shaped cut portion 13. Lower lid 6 has the same U-shaped cut portions 14. Bolts or screws 15 are inserted in the cut portions 13 and 14, and are fastened by nuts 16 to fasten frame 7 and lower lid 6.

A material supplying device 17 (Fig. 1) is detachably mounted through the main side of the lower flask 5, i.e. the lower lid 6. The device 17 comprises a cylinder 19, a piston 20, a coil spring 21, a stopper 22 and a means for adjusting the elastic force of spring 21.

The cylinder 19 is inserted through hole or opening 18 formed in lower lid 6 and is attached to the lower lid 6. The piston 20 is housed in the cylinder for reciprocal linear motion. The spring 21 is housed in the cylinder, and an upper (inside) end of the spring is abutted against the lower side of the piston 20 for elastically urging the piston 20 toward the inside of the flask. The spring has a coil shape, for example, with about 10 mm in diameter and about 3.0 cm in length. The stopper 22 is a step portion formed in the cylinder 19 for restricting the stroke-end of the piston at the most descended position, i.e. the most outside position.

The inner end of cylinder 19 is open, and the outside end, situated outside of the lower flask 5, is closed. Further, the cylinder 19 is divided into a first cylinder 24 having an inside diameter of about 13 mm and a second cylinder 25 having an inside diameter of about 11 mm, such that the cylinder 19 is detachable from the flask. The second cylinder 25 is screwed onto the outer screw portion 26 of the first cylinder projecting from the outside surface of the lower lid 6. An O-ring 27 is provided between the second cylinder 25 and the lower lid 6. Further, the first cylinder 24 has an upper portion 28 (about 13 mm in inside diameter) and a lower reduced portion 29 (about 11 mm in inside diameter). The opening 18 of the lower lid 6 has a diameter slightly larger than the outside diameter of the reduced portion 29 so that the reduced portion can be inserted, and the large diameter portion 28 engages with the edge surrounding the hole 18.

The piston 20 has a cup-like shape and is provided with a seal member 30 made of rubber or the like which is fixed on the head of the cup-like member.

The first cylinder 24 has a step 22 about 1 mm in width, for example, on the inside surface at the position where the outside diameter changes, i.e. between the large diameter portion 28 and the reduced portion 29. Further, the piston 20 is made so as to slide in the large diameter portion 28. Therefore, the piston 20 is stopped by abutting against the step 22, and is prevented from descending further. The step 22 functions as the above-mentioned stopper,.

The above-mentioned spring force adjusting means 23 comprises a screw rod 32, a screw hole (nut member) 31 formed in the outside end, i.e. the closed end, of the second cylinder 25, a disc-like spring receiver 33 attached on the inside end of the screw rod 32 so as to receive the outside end of the spring 21, and a handle member 34 provided on the outside end of the screw rod 32. The spring receiver 33 is attached on the screw rod 32 by means of a bolt 35 so that rotation of the screw rod 32 is not transmitted to the spring receiver 33.

Therefore, when the handle member 34 is operated to rotate the screw rod 32, the screw rod 32 and the spring receiver 33 are moved in a direction axial to the cylinder.

The above-mentioned first embodiment of the flask is used as mentioned hereinafter.

Referring to Fig. 1, a hollow space 36 for forming a denture base is constructed by surrounding with solid plaster 37 and 38, and a plaster model 39 of the alveolar ridge of a patient. The space 36 can be formed by using wax or the like. Artificial teeth 40 are enbedded in the solid plaster 37.

The space 36 and the inner space of the first cylinder 24 are filled with plastic material for denture base, for example, PMMA dough 41. The PMMA in the space 36 and the PMMA in the cylinder 24 are connected to each other by a sprue 42 (grooves communicating from space 36 to the inner space of the first cylinder 24).

Before the space 36 and the cylinder 24 are filled with the PMMA dough 41, the spring receiver 33 of the second cylinder 25 is lowered to the outside stroke end. Then, the force of spring 21 is in its weakest state, and the piston 20 comes to rest against the step 22 of the large diameter portion 28. Therefore, the maximum volume of PMMA in the cylinder 19 is restricted. The upper lid 2 and the lower lid 6 are tightly bounded by the bolts 9 and the nuts 10. Then, the handle 34 is rotated to push the spring receiver 33 up. The spring 21 is thus compressed, and the piston is pressed forcefully against the paste-like PMMA dough 41.

The force of the spring can be adjusted by operating the handle 34. When the spring 13 is compressed to the maximum extent (i.e. to the minimum length), the pressing force is about 10 kg in this embodiment.

In the above-mentioned state, the flask is placed in a pressure cooker or the like, and is heated to about 100 to 120°C to be polymerized.

Though the PMMA dough 41 expands due to heat when polymerization begins, the piston 20 of the material supplying device 17 cannot descend any further. Therefore, the interior pressure of the space 36 for forming the denture base is kept high, and neither bubbles nor molding cavities are produced as the PMMA is polymerized, than shrinks.

Further, if the interior pressure in the space 36 falls during the polymerization and shrinkage, additional PMMA dough is supplied into the space 36 from the material supplying device 17 and deformation due to shrinking is prevented.

Fig. 4 shows an example arrangement for the supplying device 17 when a lower denture is produced. The device 17 is positioned on a center line a and at a position shifted slightly down to the rear. The device 17 communicats to the space 36 for forming the denture base through sprue 43.

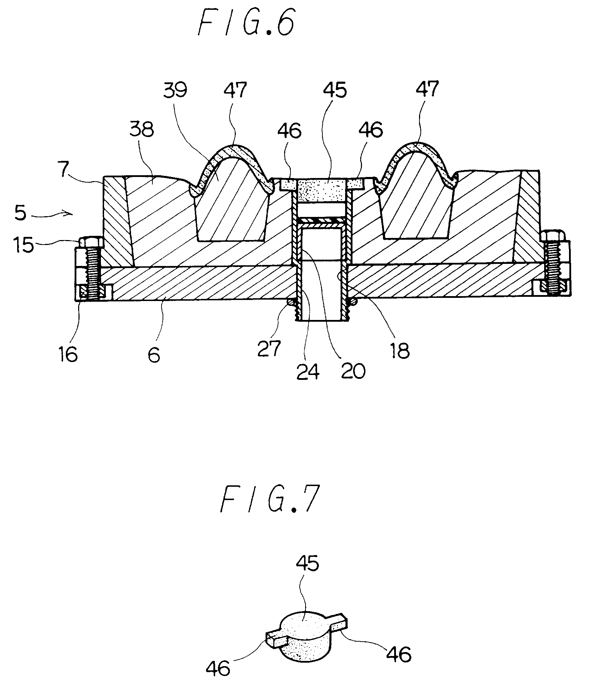

Fig. 5 shows an arrangement of the material supplying device 17 when an upper denture base is produced. Two devices 17 are positioned at the upper (in the drawing) corners and communicates to the space 36 through sprues 43.

The reason why the frame 7 of the flask has a rectangular shape is to obtain spaces for positioning the supplying devices 17. Small openings 44 are formed in the frame 7 for positioning the frames 1 and 7. Pins (not shown) or the like provided on the upper frame 1 at the corresponding positions are inserted through the opening 44 of the frames 7 in order to correctly put the upper frame 1 on the lower frame 7.

In Figs. 6 through 10, there is shown a second embodiment of the flask wherein a liner made of thermoplastic elastomer to be formed and bonded on the back surface (mucous membrain surface) of a denture base is used.

Referring to Fig. 6, a flask 5 having a lower lid 6 and a lower frame 7, respectively is shown. The lower lid 6 and the lower frame 7 are fixed to each other by bolts 15 and nuts 16, as described above with reference to Fig. 1.

A plaster model 39 is embedded in solid plaster 38. A first cylinder 24 is of a material supplying device 17. The cylinder 24 is inserted into a hole 18 and temporarily fixed to the lower lid 6 before the plaster 38 is poured into the flask 5. A piston 20 is slidably inserted in the first cylinder 24.

The open inside end of the first cylinder 24 is plugged with a rubber plug 45 in order to prevent the plaster 38 from entering the first cylinder 24. As shown in Fig. 7, the rubber plug 45 has two lateral projections 46 for forming sprue grooves.

A wax layer 47 is placed on the plaster model 39 and is formed to a shape corresponding to the liner to be formed.

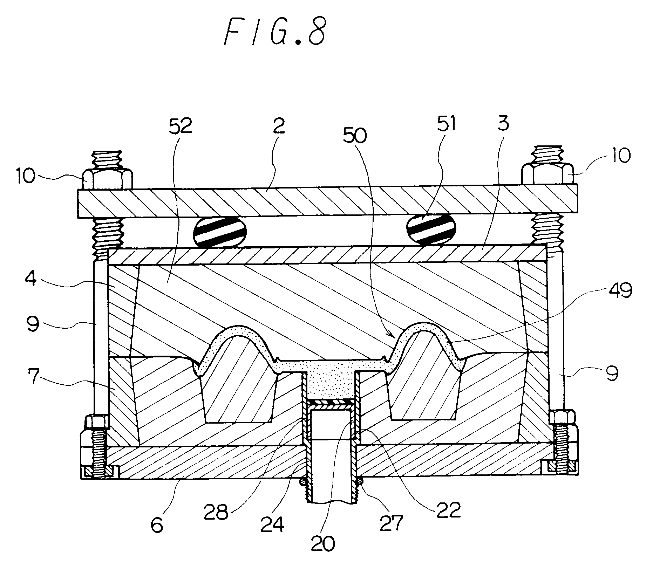

After the wax layer 47 is formed, the frame 4 of the upper flask 1 is put on the lower flask 5, liquid plaster 52 (see Fig. 8) is poured into the frame 4, and a middle lid 3 is put thereon.

After the plaster 52 sets, the flask is dipped in hot water of 100°C. Then, the wax layer 47 is softened. After the upper and lower halves of the flask are separated, the lower half is further heated by dipping in hot water to completely remove the wax. The above-mentioned middle lid 3 and the frame 4 are utilized as a pressing die for forming the liner.

In the next step, the rubber plug 45 is removed, as shown in Fig. 8, and a previously heated and softened material 49 made of thermoplastic elastomer for the liner is inserted between the pressing die and the lower flask 5. Therefore, the space for forming the denture base, i.e. a space 50 for forming a liner in the present case, and the space in the large diameter portion 28 of the first cylinder 24 are filled with the material of liner 49. With the present construction, the piston 20 is stopped by abutting against the step 22. Olefin thermoplastic elastomer is the preferred, but not necessarily only, lining material.

At the next step, in the present embodiment, a rubber ring 51 is sandwiched between the middle lid 3 and the upper lid 2, and the upper lid 2 and the lower lid 6 are fastened to each other by bolts 9 and nuts 10. At this point, the rubber ring 51 is compressed due to the clamping of the bolts 9 and nuts 10, and it applies constant and regular elastic pressure between the pressing die and the lower flask 5.

In this state, the flask 5 is dipped in hot water (about 100°C). The excess liner, heated and softened in hot water, flows out as mold flashing, and more accurately shaped lining is obtained.

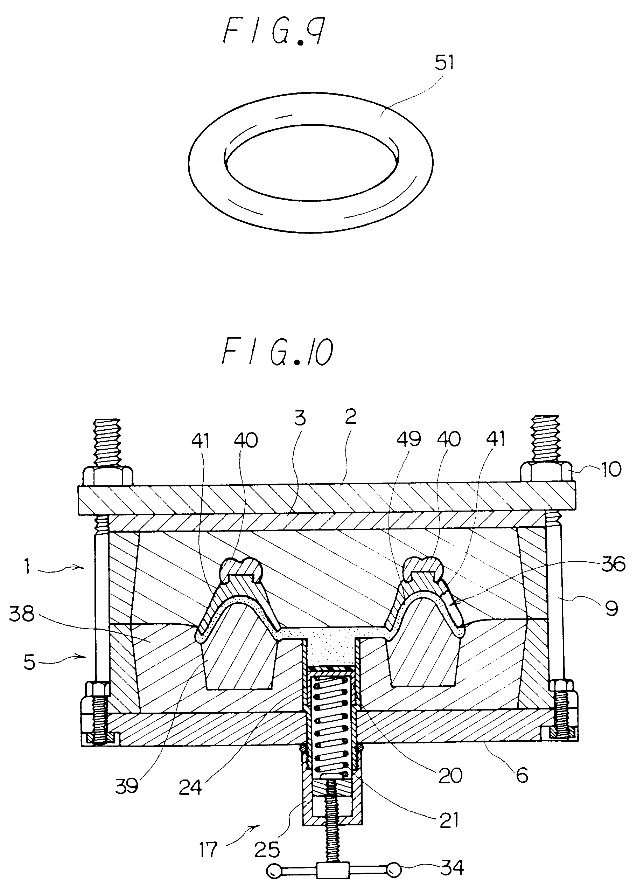

Fig. 9 shows an embodiment of shape of the rubber ring 51. The rubber ring 51 can be formed of silicone rubber, or the like.

After the liner 49 is formed, as described above, and the first cylinder 24 is filled with additional material for liner 49, the pressing die is removed. Then, the outside surface of the liner 49 is coated with a bonding or adhesive agent. Then, as shown in Fig. 10, instead of the pressing die, the upper flask 1 having a space 36 for forming the denture base including a space for forming the lining is put on the lower flask 5 so as to clamp the PMMA dough 41 therebetween.

At this step, the upper flask 1 is trial-pressed against the lower flask 5 several times, and the PMMA flashing is cut and removed.

The plaster 37 in the upper flask 1 is previously prepared by building wax onto the plaster model 39, forming the wax to the shape of the denture base to be formed, arranging artificial teeth 40 to make a denture model, and then removing the wax. Known methods can be used to embed and fix the artificial teeth in the plaster 37.

Then, the upper lid 2 is put on the middle lid 3, and the upper lid 2 and the lower lid 6 are fastened by means of the bolts 9 and the nuts 10. Next, the handle 34 is operated to compress the spring by about one half to one third of full compression. This step is performed to prevent bubbles, mold cavities, and the like from forming in the PMMA when the PMMA dough 41 is polymerized and set as in the above mentioned first embodiment.

Thereafter, the flasks 1 and 5 are dipped in a pressure cooker, and are heated to about 100 to 120°C. Then, the PMMA dough 41 is polymerized and set, and the liner 49 is bonded to the PMMA at the same time.

After the flasks 1 and 5 are heated for about five minutes, the flasks 1 and 5 are taken out of the pressure cooker. The handle 34 is operated then immediately to compress the spring to the maximum compressed state, and pressure is thereby applied to the lining material 49 in the first cylinder 24 through the piston 20. Thereafter, the flasks 1 and 5 are naturally cooled.

However, in an actual work, the handle 34 can be operated (i.e. the spring can be compressed) before the flasks 1 and 5 are heated. Such method may be easy to perform.

During the natural cooling the liner 49 shrinks. However, since additional lining material is supplied from the first cylinder 24, the liner remains free of bubbles, mold cavities and deformation.

As an experiment, a coil spring of 0.7 kg/mm in spring constant and 30 mm in normal length is used. The coil spring can effect 10 kg pressing force when compressed by 15 mm.

Under the above-mentioned condition, the amount of lining material on the back surface of the denture base is about 6 grams, and the amount of material additionally supplied from the supplying device 17 is about 1 gram.

Though two procedures for forming the denture base (including liner) are described above, the device and flask of the present invention is not limited to them. It can be utilized for forming orthodontic tools, mouthpieces, attachments, jaw restoration material, or the like. In this specification, the word "denture base" includes the above-mentioned tools.

In a third embodiment, the conventional flask is generally formed in a shape corresponding to the shape of a denture, i.e. in a semicircle shape. However, when such flasks are used and dipped in hot water to set the denture base embedded in the plaster by heat polymerization, heat is conducted from the peripheral surfaces to the center and the denture is gradually set from the peripheral portions thereof.

Generally, the peripheral portions, i.e. alveolar portion, cheek side portions and lip side portions, are thick and the center semicircular portion, i.e. palate portion, is thin. Therefore, the palate portion which is heated later is strongly influenced by shrinkage due to the polymerization.

That is to say, the material of the palate portion, which sets firstly, is pulled in the direction of shrinkage during the polymerization of the peripheral thick portions and is noticeably deformed. In fact, in the denture prepared by conventional methods there is usually a gap between the palate portion of an upper denture and mucous membrane of the patient's palate. Therefore, the denture cannot be in close contact the mucous membrane.

Further, when deformation takes place in the interior of the denture base, the denture deforms further when taken out of the plaster due to the interior strain or deformation. Thus, artificial teeth of the upper and lower dentures cannot correspond to each other precisely.

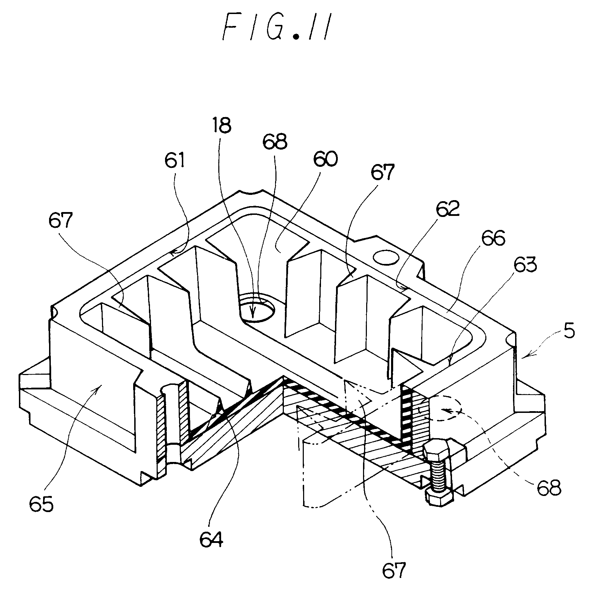

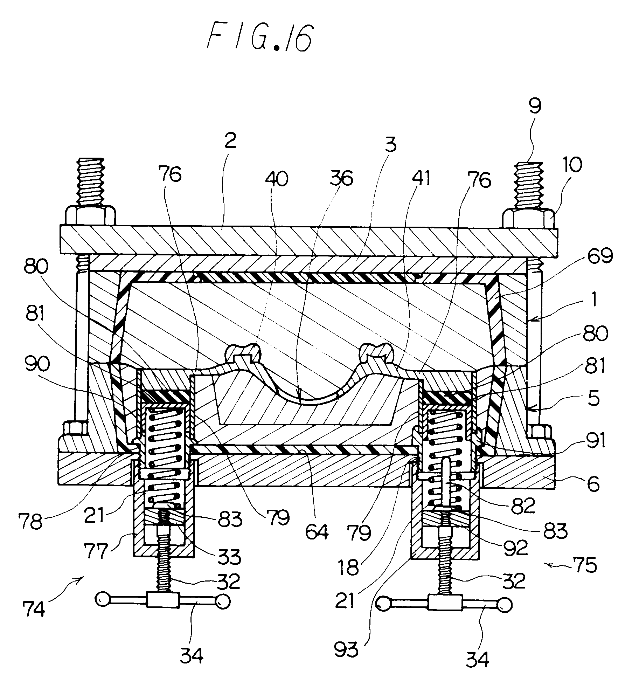

The third embodiment is improved in order to keep the deformation to a minimum. The third embodiment is described hereinafter in detail with reference to Figs. 11 to 17.

A heat-insulating member 60 made of a material having good heat-insulation, such as silicone rubber is contained in the flask 5. The heat-insulating member 60 is formed to cover three inside walls 61, 62, 63 including the corners where holes 18 are formed, and a bottom surface 64 which is a main inside surface.

The remaining side surface 65 of the flask 5 is free from heat insulation.

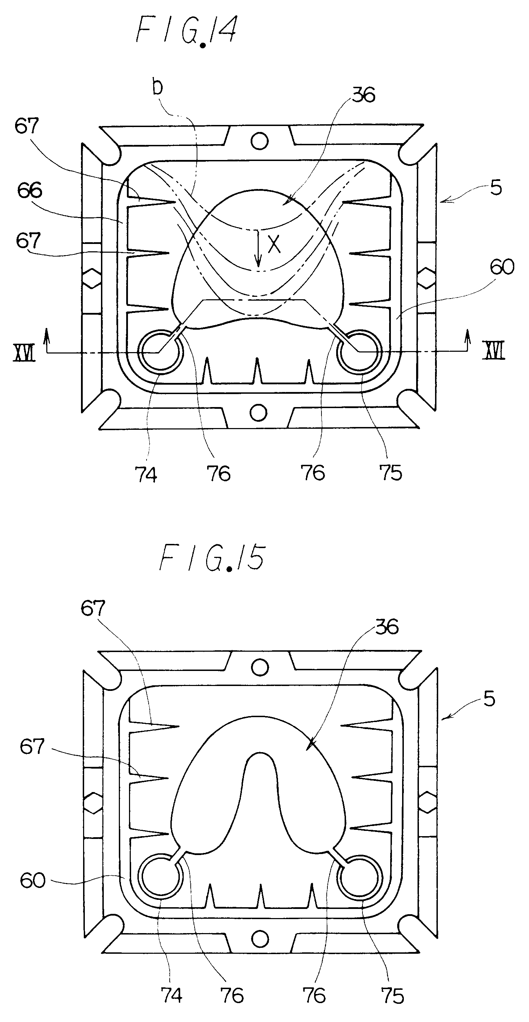

As mentioned below, heat is applied through the insulation-free side and is gradually conducted toward the corners surrounding the holes 18, as shown in Fig. 14 by lines b and arrow X.

The heat-insulating member 60 comprises laminer portions 66 of about 3 to 6 mm in thickness covering the above-mentioned three side surfaces and the bottom surface, and plural fins 67 projecting from the laminer portions 66 toward the interior of the flask 5.

The length of the fins 67 should be such that the free end of each fin reaches the denture model leaving only a slight gap or is actually in contact with the denture model. Even if the fin is in contact with the denture model, there is no problem since the fin is flexible.

Fins 67 near the insulation-free side, i.e. fins situated at mesial are larger than the other fins. The fins are provided to ensure that heat is conducted from only the insulation-free side. That is to say, the temperature will be lowest at the holes 18 due to the placement of the fins. Further, since the fins separate plaster, the solid plaster can be easily broken when the denture is taken out of the plaster.

A hole 68 is of the same size as the holes 18 of the flask 5. It is positioned to align with those holes 18.

The same heat-insulating member 69 is also provided in the upper flask 1 (see Fig. 12). The heat-insulating member 69 has a lid member 71 made of the same material at the upper side 70, and liquid plaster can be poured into the flask 1 through the opening after the lid member 71 is removed. There is a formed step between the lid member 71 and the upper surface of the heat-insulating member, and therefore, the lid member 71 is prevented from falling into the upper flask 1. Further, the under surface of the lid member 71 is also provided with heat-insulating fins 73.

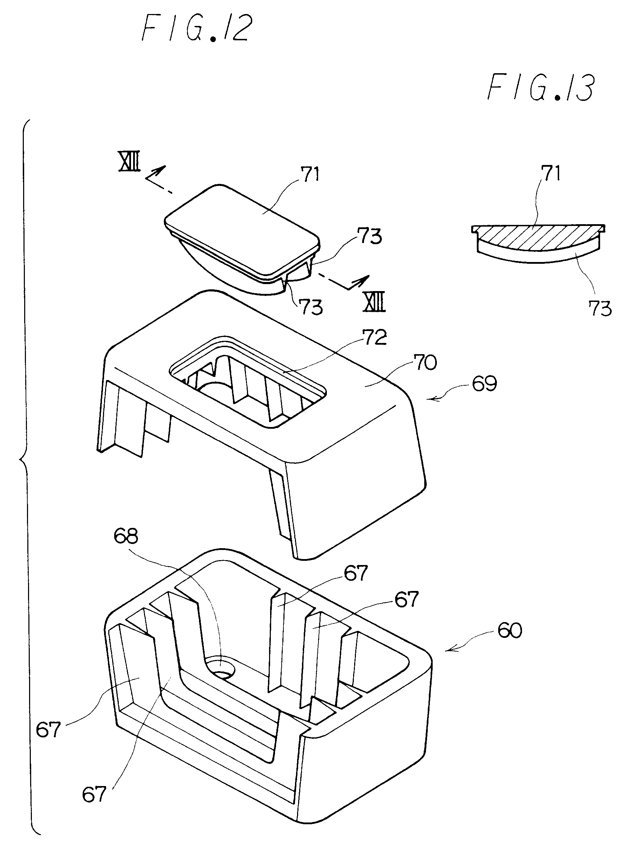

As shown in Fig. 13, the center of the lid member 71 is thick, and the fins 73 are provided on the under surface of the thick portion. The thick portion corresponds to the palate portion of the denture, and a large heat insulating effect is obtained there.

Fig. 14 shows the arrangement of a space 36 for forming a denture base and the first and second supplying devices 74,75 in the lower flask 5. In this arrangement, the first and the second supplying devices 74,75 are positioned near the peripheral portions.

In the drawings, sprues 76 communicating to the peripheral portion of the space 36 for forming denture base from the supplying devices 74 and 75 are shown.

Fig. 16 is a sectional view showing the lower flask 5 shown in Fig. 14, on which an upper flask 1 with embedded artificial teeth 40 has been placed.

The first supplying device 74 is attached to one of the holes 18 (to left of drawing), and the second supplying device 75 is attached to the other hole 18 (to right of drawing).

Each of first and second supplying devices 74 and 75 has an inside cylinder 78 and a cylinder pipe 79. The cylinder pipe 79 is made of low-heat-conductive material, such as fluorine-containing resin, and the inside cylinder is made of metal.

The structure of the first supplying device is such that the cylinder pipe 79 fits on the outside of the inside cylinder 78, and a piston 81 is stopped by abutting against an end 90 of the inside cylinder 78. That is to say, the end 90 functions as a stopper. A second cylinder 77 situated outside the flask.

On the other hand, the second supplying device 75 is constructed such that the cylinder pipe 79 is inserted inside the inside cylinder 91. The cylinder pipe 79 and the inside cylinder 91 have the same inside diameter in order to allow the seal member 80 and the piston 81 to slide through the cylinder pipe 79 and the inside cylinder 91. A pin 82 is fixed to an upper portion 83 as a stopper for restricting the descent of the piston 81. A spring receiver 92 and a second cylinder 93 are also provided. The remaining parts are the same as of the first supplying device 71.

It is necessary to match the inside diameters of the cylinder pipes 79 to the first and the second supplying devices 74 and 75. Further, springs 21 of the devices having the same spring force are used. The unformity in the designs of the devices is to provide the same material-supplying capacity to each device. The spring force of the spring 21 is preferably about 2 to 5 kg/cm².

The above-mentioned devices can be operated as same as the first embodiment.

That is, the handle 34 is rotated with fingers to press up the spring receivers 32 and 92. When the springs 21 are compressed, the combined flasks are dipped in hot water to polymerize the material.

During the polymerization, the flasks are put in a pressure cooker (not shown) such that the insulation-free side is directed to the lower side, and the level of hot water is adjusted to reach the center of the denture. In this situation, heat is conducted from the center portion to the peripheral portion of the denture, and the peripheral portion is polymerized and set last.

Therefore, material is continuously supplied from the first and second supplying devices 74 and 75 till the final stage, and a denture free of deformation is produced.

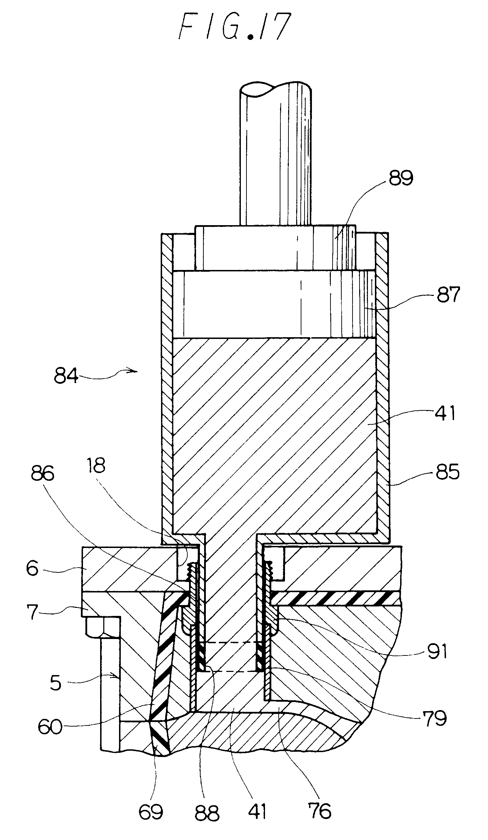

Fig. 17 shows a material charging device 84 to be used at the step before the step shown in Fig. 16. That is, the device is used when a space 36 for forming a denture base is charged with denture material. In this step, the charging device 84 is attached in place of the second cylinder 93 of the second supplying device. The charging device comprises a cylinder 85, an injection tube 86 and a piston 87, which are made of metal or plastics. An elastic tube 88 made of elastomeric material such as rubber is expanded in diameter due to injection pressure when material is charged, and because the tube fits against the cylinder pipe 79, it provides a sealing effect.

The cylinder 85 is made with a volume capable of containing material for forming a denture two or three times and receives the piston 89 of a hydraulic pressing machine.

Hereinafter, the function and operation of the charging device 84 will be explained.

At first, the cylinder 85 is filled with PMMA dough with an amount sufficient for at least one denture, and the injection tube 86 is inserted into the opening 18.

Then, the device is put on a hydraulic pressing machine together with the flask. The piston 87 is pressed by piston 89 to inject the PMMA dough 41 to the space 36 for forming the denture base through the cylinder pipe 79 and the sprues 76. At this time, the second cylinder 77 of the first supplying device 74 (see Fig. 16) is removed.

After the space 36 for forming the denture base is filled with the dough 41, the dough 41 flows into the cylinder pipe 79 of the first supplying device 74 through the sprues 76, and the cylinder pipe 79 is filled. By pushing the piston from the outside, the operator can know whether the pipe 79 is completely filled with resin or not.

After the operator confirms the fact that the piston 81 is abutted against the stopper and has stopped, injection of resin is also stopped. Then, a spring 21 is inserted into the inner cylinder 91 of the first supplying device 84, and the second cylinder 93 is attached.

Next, the injecting device 84 is removed from the flask, the sealing member 80 and the piston 81 are inserted into the inner cylinder 91, the spring 21 is housed, and the second cylinder 93 is set in place.

Thus, the first and second supplying devices 74 and 75 are attached to the flask, and by rotating the handles 34 to compress the springs 21, the resin can be automatically supplied into the space 36 for forming a denture base.

Though, in the above embodiment, a hydraulic pressing machine is used as the driving force for pressing the piston 87 of the charging device 84, compressed air can also be utilized for that purpose.

Using the present invention, the material for a denture base is supplied from a supplying device, as the denture base is polymerized or the liner included in the denture base is heated. Therefore, even if the denture base shrinks when the denture base is heated for polimerization or cooled after the polymerization, the interior pressure of the flask is kept high, and bubbles and mold cavities are prevented.

Especially, when the material of the denture base is PMMA, conventional devices present the problem of polymerization shrinkage. However, using the supplying device of the present invention, a denture base having a back mucous membrane surface precisely corresponding to the alveolar ridge of patient can be obtained, and the setting will feel good.

If the denture base material is for a liner, the liner tends to shrink and the interior pressure of the flask is reduced when the liner is cooled after heating. In addition, a shortage of material results along with bubbles and molding cavities.

However, by using the suppling device of the present invention the bubbles and molding cavities can be prevented since the material of the liner is charged with pressure by the supplying device. Further, a liner with the outer surface precisely corresponding to the mucous membrane surface can be obtained.

Further, in the supplying device of the present invention, material for a denture base or a liner can be charged after the spring is loosened (or at appropriate time) since the device has a spring force adjusting means. Therefore, the material can be easily charged, and the device can be easily operated.

When the denture base material is heated for setting, the interior pressure can be controlled for medium or maximum pressure by operating the handle. Therefore, when the denture base is polymerized or when the liner is cooled, the most suitable pressure can be applied in accordance with the situation.

Further, in the present invention, the size of spring contained therein is not limited since the device is installed on the main side of the flask such that it projects outside of the flask. Therefore, a very strong spring can be employed and sufficient pressure can be applied for any denture base to be formed.

Further, in the flask of the present invention, by providing heat-insulating members on the inside surfaces of the flask excepting one side surface and by providing the supplying device at the first position to which the heat is conducted, strain and deformation during polymerization of the denture base material can be effectively prevented, and a denture precisely corresonding to the alveolar ridge can be obtained.

## Claims

1. Device (17) for supplying plastic material under pressure into a flask (1, 5), comprising a cylinder (19) having an inside end communicating with a cavity (36) in the flask, a piston (20) slidably inserted in said cylinder, a spring (21) urging the piston toward the inside of the flask, and a stopper (22) restricting the outside stroke of the piston away from the cavity,
**characterized in that**
means (23) for adjusting the elastic force of the spring, wherein said adjusting means (23) comprises a spring receiver (33) abutting against the end of the spring (21) near the outside end of the cylinder (19), a screw-mechanism (31, 32) for moving the spring receiver in axial direction of the cylinder, and a handle member (34) for operating the screw-mechanism are provided, the screw mechanism comprising a nut element (31) fixed on the outside end of said cylinder (19) and a screw rod (32) having an outer thread portion engaged with an inner thread portion of the nut element, the handle member (34) being fixed on the end of the screw rod situated outside of the cylinder (19).

2. Device as claimed in claim 1, characterized in that the cavity (36) of the flask (15) has a form corresponding to a liner to be formed of thermoplastic elastomer and bonded on the main body of a denture base.

## Patentansprüche

1. Vorrichtung (17) für die Zufuhr von Kunststoff unter Druck in eine Küvette (1, 5), mit einem Zylinder (19) mit einem inneren Ende, welches mit einem Hohlraum (36) in der Küvette kommuniziert, und mit einem Kolben (20), welcher gleitend in diesen Zylinder eingeschoben ist, sowie mit einer Feder (21), welche den Kolben in das Innere der Küvette drückt, und mit einem Anschlag (22), welcher den äußeren Hub des Kolbens im Abstand von dem Hohlraum begrenzt,
**dadurch gekennzeichnet, daß**
Mittel (23) für die Regulierung der Federkraft der Feder vorgesehen sind, wobei dieses Regulierungsmittel (23) einen Federteller (33) enthält, welcher an dem Ende der Feder (21) in der Nähe des äußeren Endes des Zylinders (19) anliegt, sowie ein Schraubenmechanismus (31, 32), um den Federteller in axialer Richtung des Zylinder zu verschieben, sowie einen Griffteil (34) für die Betätigung dieses Schraubenmechnismus, wobei dieser Schraubenmechanismus eine an dem äußeren Ende dieses Zylinders (19) angeordnete Mutter (31) sowie eine Schraubenspindel (32) mit einem Außengewinde aufweist, welches in ein Innengewinde dieser Mutter eingreift, wobei der Griffteil (34) an dem Ende der Schraubenspindel angeordnet ist, das außerhalb des Zylinders (19) liegt.

2. Vorrichtung nach Anpruch 1,
**dadurch gekennzeichnet, daß**
der Freiraum (36) der Küvetten (1, 5) eine Form hat, welche einer Einlage entspricht, welche aus thermoplastischem Elastomer hergestellt und an dem Hauptkörper einer Zahnstützvorrichtung verklebt wird.

## Revendications

1. Dispositif (17) pour introduire une matière plastique sous pression dans un récipient (1, 5), comprenant un cylindre (19) possédant une extrémité intérieure communiquant avec une cavité (36) située dans le récipient, un piston (20) inséré de manière à pouvoir glisser dans ledit cylindre, un ressort (21) repoussant le piston à l'intérieur du récipient, et un dispositif d'arrêt (22) limitant la course du piston en direction de l'extérieur à partir de la cavité,
caractérisé en ce que des moyens (23) sont prévus pour régler la force élastique du ressort, lesdits moyens de réglage (23) comprenant un logement (33) du ressort, qui vient en butée contre l'extrémité du ressort (21) à proximité de l'extrémité extérieure du cylindre (19), un mécanisme à vis (31, 32) est prévu pour déplacer le logement du ressort dans une direction axiale du cylindre, et un élément formant poignée (34) est prévu pour actionner le mécanisme à vis, le mécanisme à vis comprenant un élément formant écrou (31) fixé sur l'extrémité extérieure dudit cylindre (19) et une tige filetée (32) possédant une partie filetée extérieurement qui engrène avec une partie taraudée de l'élément formant écrou, l'élément formant poignée (34) étant fixé à l'extrémité de la tige filetée située à l'extérieur du cylindre (19).

2. Dispositif suivant la revendication 1, caractérisé en ce que la cavité (36) du récipient (15) possède une forme qui correspond à un revêtement devant être formé d'un élastomère thermoplastique et qui est fixé au corps principal d'un support dentaire.
